# EUROPEAN PATENT SPECIFICATION

(11) **EP 1 587 332 B1**
(45) Date of publication and mention of the grant of the patent: **06.12.2006**
(21) Application number: 04101567.8
(22) Date of filing: 16.04.2004
(51) Int. Cl.: H04Q 7/22

(54) **Method and Apparatus for Dynamic Group Address Creation**
Verfahren und Vorrichtung zur Erzeugung einer dynamischen Gruppe - Adresse
Méthode et appareil pour la création d'adresse de groupe dynamique

(43) Date of publication of application: 19.10.2005
(73) Proprietor: Research In Motion Limited, Waterloo, Ontario N2L 3W8 (CA)
(72) Inventor: Carpenter, Paul Marcus, TW1 1LG, London (GB); Allen, Andrew Michael, Mundelein, Il 60060 (US); Buckley, Adrian, Brentwood, CA 94513 (US)
(74) Representative: Rickard, David John

(56) References cited:
- EP-A- 1 111 944
- WO-A-00/30374
- WO-A-01/97539

## Description

The present invention relates to a method and apparatus for dynamically creating a group address for facilitating communications among a group of users.

A wireless communication device, such as a cellular telephone or mobile station, is capable of making and receiving voice calls and/or sending and receiving data over a wireless communication network. Recent developments have given such mobile stations the ability to communicate in "push-to-talk" (PTT) modes using Push-to-talk over Cellular (PoC) technology. PoC communication utilizes Voice-over-IP (VoIP) techniques which involve the communication of data packets carrying voice information. PoC communication is adapted for one-to-one talks or group talks which are session-based.

The end user of a mobile station may send an "invitation" for PoC communication to other potential "participants" who may "accept" or ignore the invitation. When an invitation is accepted, a PoC session is created between the two participants. Further acceptances of the invitation will expand the session into a group session having more than two participants.

There are two common ways to create PoC groups for PoC services: 1) predefining a group definition by a PoC service provider or by a Web-based application tool and 2) defining a group definition at use time by a user.

Similarly, a user may communicate via instant messaging to a group of users in a chat session, exchanging instant messages among the group.

An individual may wish to be able to initiate a group communication with other persons (previously known or unknown to the individual) who share at least one common characteristic such as location, personal preference for a meal or other activity, or a set of common interests or a combination of such characteristics.

Examples of the use of such a dynamic group could be:
1. "My friends close by" - This group's membership is dynamically created based on a subset of prelisted members (friends) that are within a certain proximity of the owner of the group.
2. "My lunch buddies" - This group's membership is dynamically created based on a subset of prelisted members (friends) that have published similar lunch preferences as the owner of the group.
3. "My love match" - This groups membership is dynamically created based on a comparison of similar compatibility characteristics as the owner of the group and that are within a certain proximity of the owner of the group.
4. "My shopping buddies" - This group's membership is dynamically created based on a subset of prelisted members (friends) that have indicated that they wish to shop today.
5. "My chess game partners" - This groups membership is dynamically created based on publication of interest in playing a networked chess game.
6. "Mayday Call" - The introduction of such dynamic groups would facilitate a new call concept of "Mayday Calls". In the event of an accident the user would be able to call directly to a group of users, almost certainly previously unknown to the user requiring assistance, to request urgent assistance. An example use of this would be a skier, who had had an accident and wanted urgent assistance from other skiers in his vicinity. The Mayday Call group's membership is dynamically created based on all users that are within a certain proximity of the owner of the group that have authorized their inclusion as members of the Mayday Group.
7. Taxi Location Based Dispatch Call - The Taxi Dispatcher wishes to contact taxis within a certain proximity of the location of the pickup. The Dispatch Call group's membership is dynamically created based on all prelisted taxi driver users that are within a certain proximity of the pick-up's location. The location of the pick-up is entered by the dispatcher.

WO01/97539 discloses a system for message delivery to a plurality of cellular telephone subscribers. The system is arranged to broadcast a message substantially simultaneously to a targeted group of subscribers. Said subscribers are targeted as a group filtered from all subscribers according to at least one shared subscriber characteristic. A message broadcaster creates the group of intended recipients for the broadcast message by filtering profiles of said subscribers stored in a database. Whilst a selected group of such subscribers may form a channel supporting one to many and many to many interactions, messages from recipient mobile devices are limited to messages constructed from a predefined vocabulary or predefined messages.

A solution to one or more of the above described needs is therefore desired.

### GENERAL

Methods and apparatus for facilitating dynamic group creation for Push-to-talk over Cellular (PoC) group communication sessions, instant messaging sessions, chat and other communications are described herein.
In one embodiment the method comprises receiving at least one rule defining a member of the dynamic group in association with a group address; and populating the dynamic group with members from said mobile stations determined in accordance with the at least one rule. Rules are defined with reference to information stored in and/or provided to the communications network which may be at least presence and may also be defined with reference to location information available for the mobile stations.
Such information may be published on behalf of the stations to one or more servers adapted to identify mobile stations matching the rules. The method may comprise subscribing to the servers to obtain the matching mobile stations with which to populate dynamic group addresses. These and other aspects including one or more method, server, mobile station and computer program product aspects will be apparent to those of ordinary skill in the art.

### BRIEF DESCRIPTION OF THE DRAWINGS

In order that the invention may be readily understood, embodiments of the invention are illustrated by way of examples in the accompanying drawings, in which:
Fig. 1 is a block diagram which illustrates pertinent components of a wireless communication network and a mobile station which communicates within this network, both configured to facilitate Push-to-talk over Cellular (PoC) communications;
Fig. 2 is a more detailed diagram of the mobile station which may communicate within the wireless communication network;
Fig. 3 is block diagram of system component configurations pertaining to PoC communication sessions of the present application;
Fig. 4 is a block diagram of system component configurations pertaining to an example PoC communication session between three users in accordance with an embodiment of the invention:
Fig. 5 is flow diagram showing a flow of exemplary dynamic group creation communications among the system components of Fig. 4 in accordance with an embodiment of the invention.
Fig. 6 is flow diagram showing a flow of exemplary dynamic group creation communications among the system components of Fig. 4 in accordance with a further embodiment of the invention.

### DESCRIPTION OF PREFERRED EMBODIMENTS

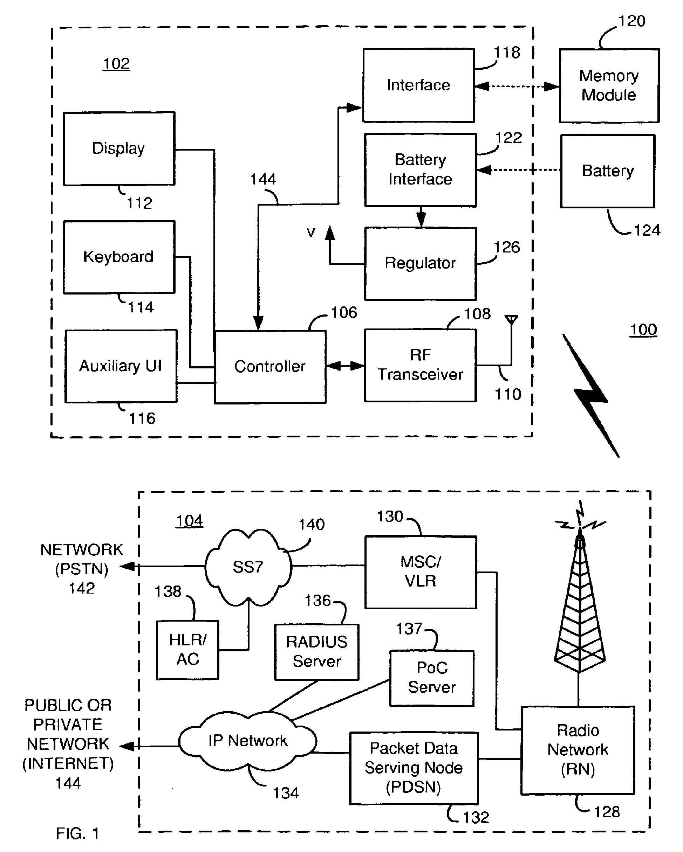

Fig. 1 is a block diagram of a communication system 100 which includes a mobile station 102 which communicates through a wireless communication network 104. Mobile station 102 preferably includes a visual display 112, a keyboard 114, and perhaps one or more auxiliary user interfaces (UI) 116, each of which is coupled to a controller 106. Controller 106 is also coupled to radio frequency (RF) transceiver circuitry 108 and an antenna 110.

Typically, controller 106 is embodied as a central processing unit (CPU) which runs operating system software in a memory component (not shown). Controller 106 will normally control overall operation of mobile station 102, whereas signal processing operations associated with communication functions are typically performed in RF transceiver circuitry 108. Controller 106 interfaces with device display 112 to display received information, stored information, user inputs, and the like. Keyboard 114, which may be a telephone type keypad or full alphanumeric keyboard, is normally provided for entering data for storage in mobile station 102, information for transmission to network 104, a telephone number to place a telephone call, commands to be executed on mobile station 102, and possibly other or different user inputs.

Mobile station 102 sends communication signals to and receives communication signals from network 104 over a wireless link via antenna 110. RF transceiver circuitry 108 performs functions similar to those of a radio network (RN) 128, including for example modulation/demodulation and possibly encoding/decoding and encryption/decryption. It is also contemplated that RF transceiver circuitry 108 may perform certain functions in addition to those performed by RN 128. It will be apparent to those skilled in art that RF transceiver circuitry 108 will be adapted to particular wireless network or networks in which mobile station 102 is intended to operate.

Mobile station 102 includes a battery interface 122 for receiving one or more rechargeable batteries 124. Battery 124 provides electrical power to electrical circuitry in mobile station 102, and battery interface 122 provides for a mechanical and electrical connection for battery 124. Battery interface 122 is coupled to a regulator 126 which regulates power to the device. When mobile station 102 is fully operational, an RF transmitter of RF transceiver circuitry 108 is typically turned on only when it is sending to network, and is otherwise turned off to conserve resources. Similarly, an RF receiver of RF transceiver circuitry 108 is typically periodically turned off to conserve power until it is needed to receive signals or information (if at all) during designated time periods.

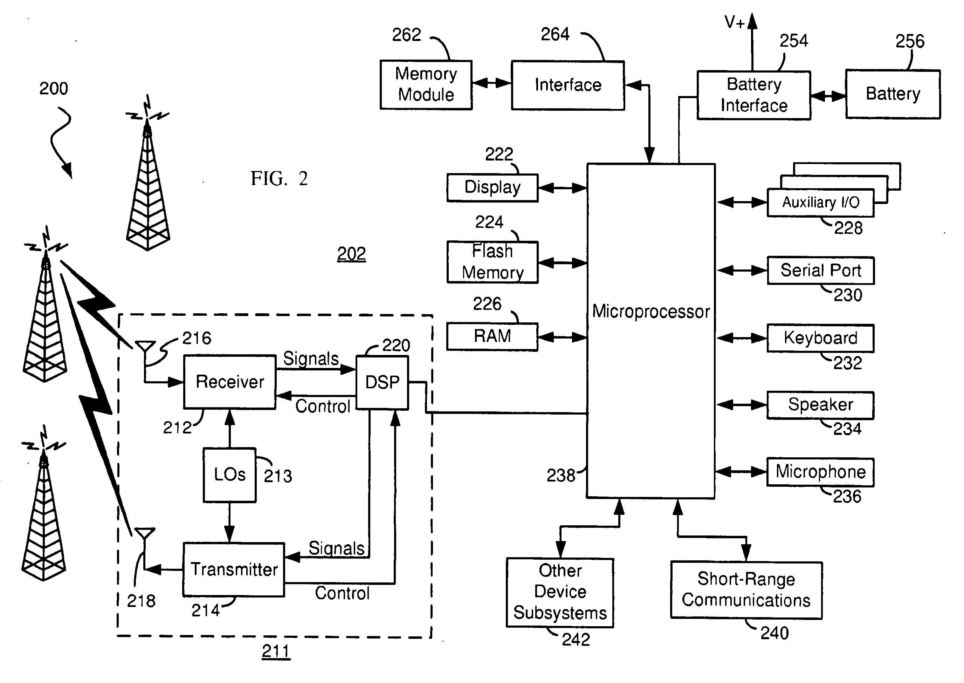

Mobile station 102 operates using a memory module 120, such as a Subscriber Identity Module (SIM) or a Removable User Identity Module (R-UIM), which is connected to or inserted in mobile station 102 at an interface 118. As an alternative to a SIM or an R-UIM, mobile station 102 may operate based on configuration data programmed by a service provider into an internal memory which is a non-volatile memory. Mobile station 102 may consist of a single unit, such as a data communication device, a cellular telephone, a multiple-function communication device with data and voice communication capabilities, a personal digital assistant (PDA) enabled for wireless communication, or a computer incorporating an internal modem. Alternatively, mobile station 102 may be a multiple-module unit comprising a plurality of separate components, including but in no way limited to a computer or other device connected to a wireless modem. In particular, for example, in the mobile station block diagram of Fig. 1, RF transceiver circuitry 108 and antenna 110 may be implemented as a radio modem unit that may be inserted into a port on a laptop computer. In this case, the laptop computer would include display 112, keyboard 114, and one or more auxiliary Uls 116, and controller 106 may remain within the radio modem unit that communicates with the computer's CPU or be embodied as the computer's CPU. It is also contemplated that a computer or other equipment not normally capable of wireless communication may be adapted to connect to and effectively assume control of RF transceiver circuitry 108 and antenna 110 of a single-unit device such as one of those described above. Such a mobile station 102 may have a more particular implementation as described later in relation to mobile station 202 of Fig. 2.

Mobile station 102 communicates in and through wireless communication network 104. In the embodiment of Fig. 1, wireless network 104 is a Third Generation (3G) supported network based on Code Division Multiple Access (CDMA) technologies. In particular, wireless network 104 is a CDMA2000 network which includes fixed network components coupled as shown in Fig. 1. Wireless network 104 of the CDMA2000-type includes a Radio Network (RN) 128, a Mobile Switching Center (MSC) 130, a Signaling System 7 (SS7) network 140, a Home Location Register/Authentication Center (HLR/AC) 138, a Packet Data Serving Node (PDSN) 132, an IP network 134, and a Remote Authentication Dial-In User Service (RADIUS) server 136. SS7 network 140 is communicatively coupled to a network 142 (such as a Public Switched Telephone Network or PSTN), whereas IP network is communicatively coupled to a network 144 (such as the Internet). Persons of ordinary skill in the art will appreciate that other networks and associated topologies including GPRS, E-GPRS and UMTS radio networks may be employed with the teachings herein.

During operation, mobile station 102 communicates with RN 128 which performs functions such as call-setup, call processing, and mobility management. RN 128 includes a plurality of base station transceiver systems that provide wireless network coverage for a particular coverage area commonly referred to as a "cell". A given base station transceiver system of RN 128, such as the one shown in Fig. 1, transmits communication signals to and receives communication signals from mobile stations within its cell. The base station transceiver system normally performs such functions as modulation and possibly encoding and/or encryption of signals to be transmitted to the mobile station in accordance with particular, usually predetermined, communication protocols and parameters, under control of its controller. The base station transceiver system similarly demodulates and possibly decodes and decrypts, if necessary, any communication signals received from mobile station 102 within its cell. Communication protocols and parameters may vary between different networks. For example, one network may employ a different modulation scheme and operate at different frequencies than other networks. The underlying services may also differ based on its particular protocol revision.

The wireless link shown in communication system 100 of Fig. 1 represents one or more different channels, typically different radio frequency (RF) channels, and associated protocols used between wireless network 104 and mobile station 102. An RF channel is a limited resource that must be conserved, typically due to limits in overall bandwidth and a limited battery power of mobile station 102. Those skilled in art will appreciate that a wireless network in actual practice may include hundreds of cells depending upon desired overall expanse of network coverage. All pertinent components may be connected by multiple switches and routers (not shown), controlled by multiple network controllers.

For all mobile stations 102 registered with a network operator, permanent data (such as mobile station 102 user's profile) as well as temporary data (such as mobile station's 102 current location) are stored in a HLR/AC 138. In case of a voice call to mobile station 102, HLR/AC 138 is queried to determine the current location of mobile station 102. A Visitor Location Register (VLR) of MSC 130 is responsible for a group of location areas and stores the data of those mobile stations that are currently in its area of responsibility. This includes parts of the permanent mobile station data that have been transmitted from HLR/AC 138 to the VLR for faster access. However, the VLR of MSC 130 may also assign and store local data, such as temporary identifications. Mobile station 102 is also authenticated on system access by HLR/AC 138. In order to provide packet data services to mobile station 102 in a CDMA2000-based network, RN 128 communicates with PDSN 132. PDSN 132 provides access to the Internet 144 (or intranets, Wireless Application Protocol (WAP) servers, etc.) through IP network 134. PDSN 132 also provides foreign agent (FA) functionality in mobile IP networks as well as packet transport for virtual private networking. PDSN 132 has a range of IP addresses and performs IP address management, session maintenance, and optional caching. RADIUS server 136 is responsible for performing functions related to authentication, authorization, and accounting (AAA) of packet data services, and may be referred to as an AAA server.

Wireless communication network 104 also includes a Push-to-talk over Cellular (PoC) server 137 which may be coupled to IP network 134. PoC server 137 operates to facilitate PoC individual and group communication sessions between mobile stations within network 104. A conventional PoC communication session involves a session connection between end users of mobile stations, referred to as session "participants", who communicate one at a time in a half-duplex manner much like conventional walkie-talkies or two-way radios.

Those skilled in art will appreciate that wireless network 104 may be connected to other systems, possibly including other networks, not explicitly shown in Fig. 1. A network will normally be transmitting at very least some sort of paging and system information on an ongoing basis, even if there is no actual packet data exchanged. Although the network consists of many parts, these parts all work together to result in certain behaviours at the wireless link.

Fig. 2 is a detailed block diagram of a preferred mobile station 202. Mobile station 202 is preferably a two-way communication device having at least voice and advanced data communication capabilities, including the capability to communicate with other computer systems. Depending on the functionality provided by mobile station 202, it may be referred to as a data messaging device, a two-way pager, a cellular telephone with data messaging capabilities, a wireless Internet appliance, or a data communication device (with or without telephony capabilities). Mobile station 202 may communicate with any one of a plurality of base station transceiver systems 200 within its geographic coverage area.

Mobile station 202 will normally incorporate a communication subsystem 211, which includes a receiver 212, a transmitter 214, and associated components, such as one or more (preferably embedded or internal) antenna elements 216 and 218, local oscillators (LOs) 213, and a processing module such as a digital signal processor (DSP) 220. Communication subsystem 211 is analogous to RF transceiver circuitry 108 and antenna 110 shown in Fig. 1. As will be apparent to those skilled in field of communications, particular design of communication subsystem 211 depends on the communication network in which mobile station 202 is intended to operate.

Mobile station 202 may send and receive communication signals over the network after required network registration or activation procedures have been completed. Signals received by antenna 216 through the network are input to receiver 212, which may perform such common receiver functions as signal amplification, frequency down conversion, filtering, channel selection, and like, and in example shown in Fig. 2, analog-to-digital (A/D) conversion. A/D conversion of a received signal allows more complex communication functions such as demodulation and decoding to be performed in DSP 220. In a similar manner, signals to be transmitted are processed, including modulation and encoding, for example, by DSP 220. These DSP-processed signals are input to transmitter 214 for digital-to-analog (D/A) conversion, frequency up conversion, filtering, amplification and transmission over communication network via antenna 218. DSP 220 not only processes communication signals, but also provides for receiver and transmitter control. For example, the gains applied to communication signals in receiver 212 and transmitter 214 may be adaptively controlled through automatic gain control algorithms implemented in DSP 220.

Network access is associated with a subscriber or user of mobile station 202, and therefore mobile station 202 requires a memory module 262, such as a Subscriber Identity Module or "SIM" card or a Removable User Identity Module (R-UIM), to be inserted in or connected to an interface 264 of mobile station 202 in order to operate in the network. Alternatively, memory module 262 may be a non-volatile memory which is programmed with configuration data by a service provider so that mobile station 202 may operate in the network. Since mobile station 202 is a mobile battery-powered device, it also includes a battery interface 254 for receiving one or more rechargeable batteries 256. Such a battery 256 provides electrical power to most if not all electrical circuitry in mobile station 202, and battery interface 254 provides for a mechanical and electrical connection for it. The battery interface 254 is coupled to a regulator (not shown in Fig. 2) which provides power V+ to all of the circuitry.

Mobile station 202 includes a microprocessor 238 (which is one implementation of controller 106 of Fig. 1) which controls overall operation of mobile station 202. This control includes network selection techniques of the present application. Communication functions, including at least data and voice communications, are performed through communication subsystem 211. Microprocessor 238 also interacts with additional device subsystems such as a display 222, a flash memory 224, a random access memory (RAM) 226, auxiliary input/output (I/O) subsystems 228, a serial port 230, a keyboard 232, a speaker 234, a microphone 236, a short-range communications subsystem 240, and any other device subsystems generally designated at 242. Some of the subsystems shown in Fig. 2 perform communication-related functions, whereas other subsystems may provide "resident" or on-device functions. Notably, some subsystems, such as keyboard 232 and display 222, for example, may be used for both communication-related functions, such as entering a text message for transmission over a communication network, and device-resident functions such as a calculator or task list. Operating system software used by microprocessor 238 is preferably stored in a persistent store such as flash memory 224, which may alternatively be a read-only memory (ROM) or similar storage element (not shown). Those skilled in the art will appreciate that the operating system, specific device applications, or parts thereof, may be temporarily loaded into a volatile store such as RAM 226.

Microprocessor 238, in addition to its operating system functions, preferably enables execution of software applications on mobile station 202. A predetermined set of applications which control basic device operations, including at least data and voice communication applications, will normally be installed on mobile station 202 during its manufacture. A preferred application that may be loaded onto mobile station 202 may be a personal information manager (PIM) application having the ability to organize and manage data items relating to user such as, but not limited to, e-mail, calendar events, voice mails, appointments, and task items. Naturally, one or more memory stores are available on mobile station 202 and SIM 262 to facilitate storage of PIM data items and other information.

The PIM application preferably has the ability to send and receive data items via the wireless network. In a preferred embodiment, PIM data items are seamlessly integrated, synchronized, and updated via the wireless network, with the mobile station user's corresponding data items stored and/or associated with a host computer system thereby creating a mirrored host computer on mobile station 202 with respect to such items. This is especially advantageous where the host computer system is the mobile station user's office computer system. Additional applications may also be loaded onto mobile station 202 through network, an auxiliary I/O subsystem 228, serial port 230, short-range communications subsystem 240, or any other suitable subsystem 242, and installed by a user in RAM 226 or preferably a non-volatile store (not shown) for execution by microprocessor 238. Such flexibility in application installation increases the functionality of mobile station 202 and may provide enhanced on-device functions, communication-related functions, or both. For example, secure communication applications may enable electronic commerce functions and other such financial transactions to be performed using mobile station 202.

In a data communication mode, a received signal such as a text message, an e-mail message, or web page download will be processed by communication subsystem 211 and input to microprocessor 238. Microprocessor 238 will preferably further process the signal for output to display 222 or alternatively to auxiliary I/O device 228. A user of mobile station 202 may also compose data items, such as e-mail messages, for example, using keyboard 232 in conjunction with display 222 and possibly auxiliary I/O device 228. Keyboard 232 is preferably a complete alphanumeric keyboard and/or telephone-type keypad. These composed items may be transmitted over a communication network through communication subsystem 211.

For voice communications, the overall operation of mobile station 202 is substantially similar, except that the received signals would be output to speaker 234 and signals for transmission would be generated by microphone 236. Alternative voice or audio I/O subsystems, such as a voice message recording subsystem, may also be implemented on mobile station 202. Although voice or audio signal output is preferably accomplished primarily through speaker 234, display 222 may also be used to provide an indication of the identity of a calling party, duration of a voice call, or other voice call related information, as some examples.

Serial port 230 in Fig. 2 is normally implemented in a personal digital assistant (PDA)-type communication device for which synchronization with a user's desktop computer is a desirable, albeit optional, component. Serial port 230 enables a user to set preferences through an external device or software application and extends the capabilities of mobile station 202 by providing for information or software downloads to mobile station 202 other than through a wireless communication network. The alternate download path may, for example, be used to load an encryption key onto mobile station 202 through a direct and thus reliable and trusted connection to thereby provide secure device communication.

Short-range communications subsystem 240 of Fig. 2 is an additional optional component which provides for communication between mobile station 202 and different systems or devices, which need not necessarily be similar devices. For example, subsystem 240 may include an infrared device and associated circuits and components, or a Bluetooth^{™} communication module to provide for communication with similarly-enabled systems and devices. Bluetooth^{™} is a registered trademark of Bluetooth SIG, Inc.

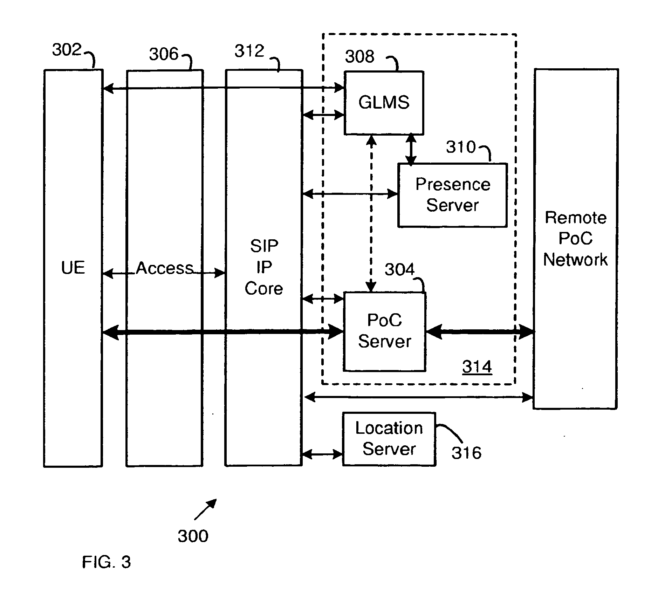

Fig. 3 is a block diagram of relevant system components pertaining to PoC communications of the present application. System components 300 include user equipment (UE) 302 which represents a mobile station, a PoC server 304, an access network 306, a Group and List Management Server (GLMS) 308, a SIP/IP core 312, a Presence Server 310 and a Location Server 316. The 3GPP defined IP Multimedia Subsystem (IMS) is an example of a SIP/IP core for mobile networks. Some of these components may be optional or not necessary for fundamental operation. Though illustrated as individual component devices some or all of the components 304, 308, 310 collectively 314 may be configured within the same device (not shown).

A PoC communication session is a session connection between end users of a UE 302, referred to as session "participants", who communicate one at a time in a half-duplex manner. PoC communication utilizes Voice over IP (VoIP) technology which involves the communication of data packets carrying voice information. UE 302 is terminal equipment (e.g. a mobile station) which includes PoC application client software, which includes functionality of the present application but otherwise utilizes conventional techniques. SIP/IP core 312 includes a plurality of Session Initiation Protocol (SIP) proxies and SIP registrars. The first point of contact for UE 302 is one of the proxies in SIP/IP core 312 that is used by UE 302 as the outbound proxy. In the 3GPP IMS architecture, the outbound proxy is known as the Proxy-CSCF (P-CSCF). SIP/IP Core 312 performs the following functions: (1) routing of SIP signaling between UE 302 and PoC server 304; (2) termination of SIP compression from UE 302; (3) authentication and authorization; (4) maintenance of the registration state; and (5) reporting to the charging system. UE 302 sends all its SIP messages to the IP address of the outbound proxy after resolving the SIP Uniform Resource Identifier (URI) of the outbound proxy to an IP address.

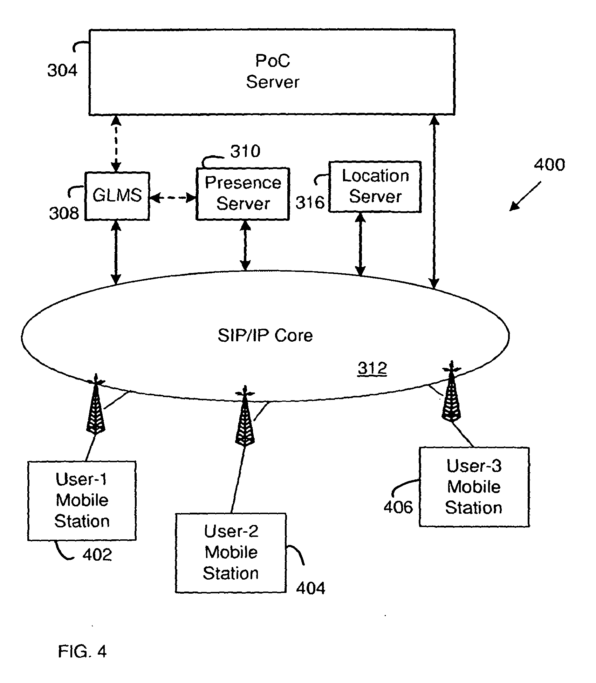

End users use GLMS 308 to manage groups, contact lists, and access lists. A contact list may be used by end users to establish an instant talk session with other PoC users or PoC Groups. An end user may have one or several contact lists including identities of other PoC users or PoC groups. Contact list management includes operations to allow UE 302 to store and retrieve the contact lists managed by GLMS 308. End users can define PoC groups, particularly as described further below with reference to Figs. 4-5. An end user may use a PoC group to initiate an instant group talk session or a chat group talk session, depending on the type of group. An access list is used by the end user as a means of controlling who is allowed to initiate instant talk sessions to the end user. An access list contains end user defined identities of other end users or groups. The end user may have one blocked identities list and one granted identities list.

With reference to group management in accordance with the present application as described further below with reference to Figs. 4-5, GLMS 308 stores group lists referenced by a group address (such as a group URL). Lists of members of groups can be static or dynamic. GLMS 308 accepts subscriptions from users to a group address containing a set of rules (i.e. filters) that define who is an active member of the group identified by the group address. A user may obtain a group address from GLMS 308 or create one in accordance with a protocol therefore such as Extensible Markup Language (XML) Configuration Access (XCAP).

In turn, GLMS 308 subscribes or otherwise interfaces to Presence Server 310 to obtain users whose presence information matches the rules specified in the user subscription. The GLMS thus becomes a watcher for such presence information. GLMS 308 also notifies the subscribing user when a group member who meets the rules in the subscription is available upon receipt information from Presence Server 310. Such notification may be controlled by a group address owner in accordance with an authorization policy defined when the dynamic group is created. As well, such group address information may only be sent to those subscribing users to the group who subscribe to this type of information.

Further, GLMS may notify PoC server 304 (e.g. through a SIP Subscribe-Notify mechanism or other means) who the active members of the group are when members join or leave.

PoC server 304 includes functionality to perform the PoC service. PoC Server 304 typically performs functions such as: (1) end-point for SIP signaling; (2) end-point for real-time transport protocol (RTP) and RTP Control Protocol (RTCP) signaling; (3) SIP session handling; (4) policy control for access to groups; (5) group session handling; (6) access control; (7) floor control functionality (floor control is a control mechanism that arbitrates requests, from the UEs, for the right to speak); (8) talker identification; (9) participant information; (10) quality feedback; (11) charging reports; and (12) media distribution.

Presence server 310 manages presence information that is uploaded by presence user/network/external agents, and is responsible for combining the presence-related information from the information it receives from multiple sources into a single presence document. Presence server 310 delivers notifications of presence information to authorized watchers for such information as described above. Watchers may subscribe to the presence information to receive the notifications.

Location Information is information about the location of a User (i.e. UE 302). It could be generated in a variety of ways such as through GPS satellite information for UEs so equipped or based on triangulation of the signal from a UE collected from multiple base stations of access network 306, among others. In addition to direct publishing to presence server 310 by the user, location information may be gathered and distributed by a location server 316. GSM/UMTS networks support a Gateway Mobile Location Center (GMLC) network element that collects location information from various location collecting sources. Such an element may be adapted to publish this information to presence server 310. The rules for dynamic group address determination using location information can be matched in presence server 310 if the location information is published to presence server 310 or alternatively location server 316 (such as a GMLC or another server communicating with the GMLC) could be adapted to do the matching of the rules.

Each entity in the PoC system is assigned one or more IP addresses belonging to public or private IP realms. On the other hand, an end user may address another user by a phone number. UE 302 sends a phone number to SIP/IP core 312 in a TEL Uniform Resource Locator (URL). The phone number may use the international E.164 format (prefixed with a '+' sign) or a local format using a local dialing plan and prefix. SIP/IP core 312 interprets the phone number with a leading '+' to be an E.164 number. Addressing by TEL URL for a PoC session requires that PoC Server 304 can resolve the TEL URL to a SIP URI, for instance by using DNS/ENUM or other local data base. A phone number in a local format is converted to the E.164 format before DNS/ENUM is used.

For a group communication to take place (such as a Push to Talk communication, or an instant messaging chat session) a group address is used for addressing communication signaling for setup of the group communication with members of the group. In accordance with the teachings herein, in order for a group to be created dynamically for a communication, members of the dynamic group address need to be populated. Such a dynamic group address may be populated with members selected from users of the network using presence information which may include location information about the users stored by or provided to the network and filtered according to rules. A user wishing to establish a particular dynamic group may provide the rules for populating the group.

Rules defining criteria which must be satisfied by another to be included in a particular group may be defined in a number of ways, including, for example, using Extensible Markup Language (XML) documents well known in the art. Rules may reference presence and/or location data elements, use comparison expressions and other data to define eligibility as a member of the group. For example, a mayday filter may reference presence data such as user's publishing a willingness to be considered for a mayday group, current location of users and a proximity threshold (e.g. 500m).

In the simplest form, the user who has this capability either creates (using a protocol such as XCAP) a group address (such as a SIP URL) or is provided by the network with a group address that has no permanent group members. Rather, the user defines rules or filters for association with the group address that determine the dynamic membership of the group based on information stored in or provided to the network concerning other users.

Dynamic group membership may be determined in a number of ways. Membership may be determined as a subset of users in the network who indicate that they are interested in being members of a particular dynamic group. Potential users may publish via presence techniques a desire to be considered for a particular group. Membership may be determined from a subset of particular pre-selected or named users identified by the dynamic group address owner and associated with the group at the time the dynamic group address is created. A user may be a group owner defining the rules for membership and pre-select a group of fellow users as potential candidates and provide rules for dynamically defining the group at any instance using presence and/or location information published for those pre-selected users.

Other users who wish to be candidate members of such dynamic groups may publish (using presence techniques) an indication that they wish to participate in particular dynamic groups and, additionally, either directly or through information collected by the network publish presence and/or location information about the user for use to determine membership dynamically. In addition to publishing an interest in a specific dynamic group, users may publish an interest in being a candidate for dynamic groups generally. Those users not choosing to be considered can thus be easily excluded.

Other than the inventive techniques described herein, the PoC architecture and signaling may be the same as is conventional as described in current specifications such as Push-to-talk over Cellular (PoC), Architecture, PoC Release 1.0 - Architecture V1.1.0 (2003-08) Technical Specification; and Push-to-talk over Cellular (PoC), Signaling Flows, PoC Release 1.0 - Signaling Flows V1.1.3 (2003-08) Technical Specification and OMA Standard Push to Talk over Cellular (PoC) - Architecture Draft Version 1.0 - 25 March 2004.

Some users may choose to be anonymous when they become members of a dynamic group. Anonymous users may choose to only watch/listen to the communication within the dynamic group - this is known as passive participation. Mechanisms may be provided to enable users to indicate if they require anonymity when joining dynamic groups that they wish to participate in. The creator of a dynamic group can also determine if anonymous members will be allowed, and whether they can actively or only passively participate as part of the rules for group creation. A mechanism also is provided for anonymous group members to reveal their identity later once they are participating in the dynamic group. Preferably to facilitate anonymity, users may include such preference information in their respective presence information. Dynamic group owners may then choose filtering (e.g. an authorization attribute) which permits or denies membership to anonymous users.

The user(s) subscribes to the group address and the network subscribes to the presence information based on the rules associated with the group address. This may include the use of presence filters in the subscription that trigger notifications only when the rules for active membership of the group are satisfied. When a candidate member of the group publishes directly (or has published on their behalf by the network) information that satisfies the rules for active membership of the group, a notification is sent indicating that this member is now an active member of the group. This notification may be delivered to the other active members of the group who have subscribed to the group address if such notification is authorized by the dynamic group address owner. Subscribing to such group membership information is optional.

When an active group member performs a group communication (such as a Push-To-Talk talk burst) to the dynamic group address. The communication is routed to all the currently active members of the group.

Fig. 4 is a block diagram of a system component configuration pertaining to PoC communications between three users in accordance with an embodiment of the invention. Persons of ordinary skill in the art will appreciate that the choice of three users is merely illustrative and not limiting. Configuration 400 comprises elements of configuration 300, namely PoC Server 304, GLMS 308, presence server 310 which may be provided as individual components or collected and provided as one component (e.g. 314) or in other collected component configurations (not shown) location server 316 and SIP/IP core 312. In addition, there are three example users, User-1 402, User-2 404 and User-3 406 each with respective UE 302.

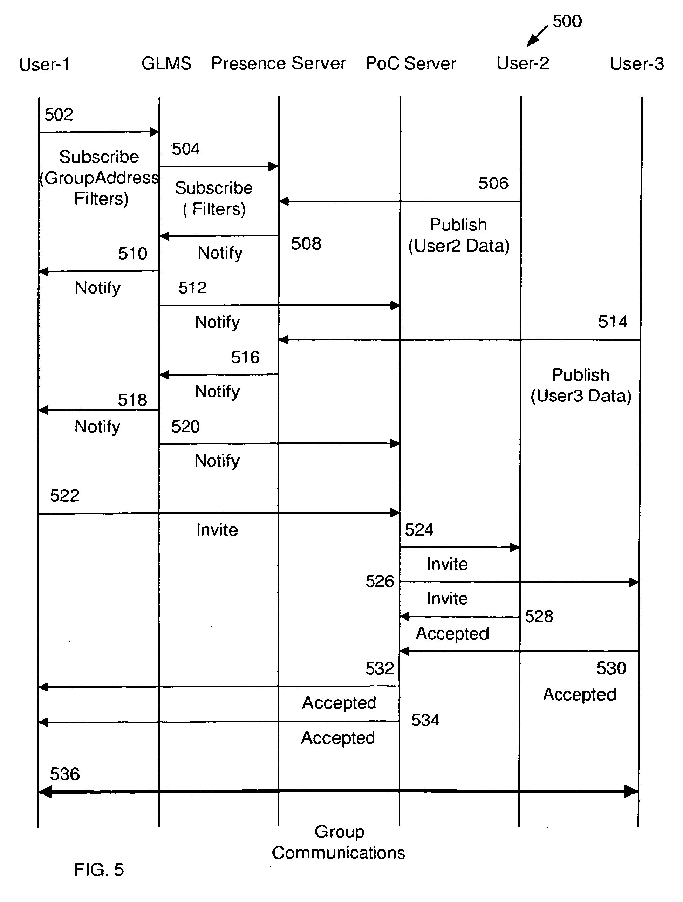

Within the context of the architecture above, Fig. 5 is a flow 500 which illustrates an example PoC communication session among the three users of Fig. 4. The representative flow illustrates a method for dynamic group address creation for PoC communications. The method may be embodied in a computer program product which includes a computer storage medium (e.g. computer disk or memory) and computer instructions stored in the computer storage medium.

In the present example, the group address and candidate members (friends) for the group have been defined by the owner in advance such as is known. Using a User Interface (UI) (e.g. UE 302) not shown, user-1402 defines rules for creating dynamically the address. The UI preferably allows the user to specify or select from a set of rules/options to assist with the definition of the rules for association with the group address.

Flow operations 500 start at step 502 where User-1 402 subscribes to the Group Address (URL) by sending a SIP Subscribe to GLMS 308. The SIP Subscribe request contains filters in the body of the request that indicate the rules for active membership of the group. In this case, the filters indicate a lunch preference for User-1 402 which is for Italian food. GLMS 308, either using SIP Subscribe or some other mechanism, obtains from Presence Server 310 a list of users who are present who meet the criteria for group membership (step 504).

At step 506, User-2 404 sends SIP Publish to Presence Server 310 to publish presence information about this user including information about lunch preferences. In this case Chinese and Italian food preferences are published. At step 508, Presence Server 310, using either SIP Notify or some other means, notifies GLMS 308 that User-2 404 is available and meets the rules specified by User-1 402. A contact address for User-2 404 is provided. GLMS 308 adds User-2 404 to the group.

At step 510 GLMS 308 sends a SIP Notify to User-1 402 indicating that User-2 404 is now a member of the group because of a shared preference for Italian food. At step 512, GLMS, using either a SIP Notify some other means, notifies PoC Server 304 that User-2 404 is now a member of the group.

At step 514, User-3 406 sends SIP Publish to Presence Server 310 to publish presence information about this user including information about lunch preferences, in this case Italian and Mexican foods. At step 516, Presence Server 310, using either SIP Notify or some other means, notifies GLMS 308 that User-3 406 is available and meets the rules specified by User-1 404 and provides User-3's 406 contact address. GLMS 308 adds User-3 406 to the group.

At step 518, GLMS sends a SIP Notify to User-1 402 indicating that User-3 406 is now a member of the group. At step 520, GLMS 308 using either a SIP Notify some other means notifies PoC Server 304 that User-3 406 is now a member of the group.

At step 522, User-1 invites the Italian food loving fellow users to lunch using the mobile station to place a PoC call by sending a SIP Invite to PoC server 04 addressed to the Group Address that now contains User-2 404 and User-3 406.

At step 524, PoC server 304 that owns this Group Address resolves it to the member addresses of User-2 404 and User-3 406 and sends a SIP Invite to the call to User-2 404. At step 526, PoC server 304 sends a SIP Invite to User-3 406 as well.

At steps 528 and 530, User-2 404 and User-3 406 respectively accept the call by sending a SIP 200 OK response to PoC server 304. At steps 532 and 534 the respective acceptances are relayed to User-1 402 by PoC server 304 by sending respective SIP 200 OK responses to User-1 402.

At step 536, User-1 402 starts to talk to the other users (404 406) using the voice communication path established by PoC server 304 in order to select an Italian restaurant at which the users 402-406 may meet for lunch.

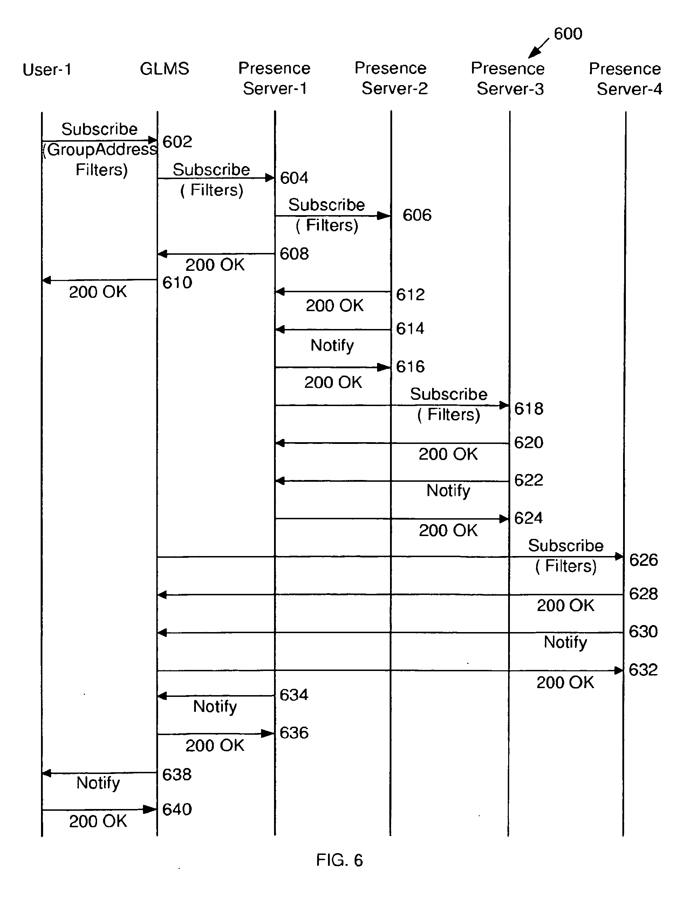

Within the context of the general architecture above in Fig. 4 and including additional presence servers that are not shown therein, Fig. 6 is a flow 600 which illustrates a portion of an example PoC communication session initiation by a user to dynamically define members for a group address from users whose presence information is managed by a plurality of presence servers. Individual presence servers may be from the same or different domains and networks. The method illustrated may be embodied in a computer program product which includes a computer storage medium (e.g. computer disk or memory) and computer instructions stored in the computer storage medium.

Operations 600 begin for a flow to search multiple servers and at step 602 a user (e.g. User-1) subscribes to a group address (URL) by sending a SIP Subscribe to GLMS containing filters in the body of the request that indicate the rules for active membership of the group. GLMS has a resource list comprising presence servers in its own or other domains that may also contain matches for the filters in the subscribe message. In this case GLMS has a resource list that contains Presence Server-1 and Presence Server-4. GLMS uses a SIP Subscribe to subscribe to Presence Server-1 to obtain the list of users who are present who meet the criteria for group membership. This Subscribe is routed to Presence Server-1 (step 604).

Presence Server-1, as well as searching its own store (e.g. a presence database) for matches, also has a resource list containing other presence servers in its own or other domains that may also contain matches for the filters in the subscribe. In this case Presence Server-1 has a resource list that contains Presence Server-2 and Presence Server-3. Presence Server-1 uses a SIP Subscribe to subscribe to Presence Server-2 to obtain the list of users who are present who meet the criteria for group membership. This subscribe is routed to Presence Server-2 (step 606).

At step 608 Presence Server-1 acknowledges the Subscribe by sending a SIP 200 OK back to GLMS and at step 610 GLMS acknowledges User-1's Subscribe by sending a SIP 200 OK back to the PTT Terminal of user-1.

At step 612 Presence Server-2 acknowledges the Subscribe by sending a SIP 200 OK back to Presence Server-1. Presence Server-2 uses a SIP Notify to notify Presence Server-1 of the matches found and receives a SIP 200 OK in return (steps 614-616).

At step 618 Presence Server-1 uses a SIP Subscribe to also subscribe to Presence Server-3 to obtain the list of users who are present who meet the criteria for group membership. This Subscribe is routed to Presence Server-3. At steps 620-624, Presence Server-3 acknowledges the Subscribe by sending a SIP 200 OK back to the Presence Server-1 and Presence Server-3 uses a SIP Notify to notify Presence Server-1 of the matches found receiving Presence Server-1's acknowledgement to the Notify in return.

At steps 626-628, GLMS uses a SIP Subscribe to subscribe to Presence Server-4 to obtain the list of users who are present who meet the criteria for group membership. This Subscribe is routed to Presence Server-4 which acknowledges the Subscribe by sending a SIP 200 OK back to GLMS.

Presence Server-4 uses a SIP Notify to notify the GLMS of the matches found and GLMS acknowledges the Notify by sending a SIP 200 OK back to the Presence Server-4 (steps 630-632).

Presence Server-1 aggregates (combines) the responses in the received Notify messages from Presence Server-2 and Presence Server-3 and uses a SIP Notify to notify GLMS of the matches found (step 634). GLMS acknowledges the Notify by sending a SIP 200 OK back to the Presence Server-1 (step 636).

GLMS aggregates (combines) the responses from Presence Server-1 and Presence Server-4 in the received Notify communications. GLMS uses a SIP Notify to notify User-1 of the matches found and the user's UE acknowledges the Notify by sending a SIP 200 OK back to GLMS (steps 638-640). Though notification is described whereby members are aggregated before messaging to another entity (e.g. GLMS, a presence server, or UE), messaging could be initiated as soon as a member is determined to gradually populate the group. As well, persons skilled in the art will appreciate that server entities may communicate with fellow servers simultaneously rather than in turn as shown and described.

The above flow illustrates how Resource List search hierarchies can be used to search multiple servers and multiple domains for matches. This technique can be utilized in situations which require searches in multiple domains/networks. For example a Mayday Call by User-1 could use a "mayday" URL for the group. User-1's PTT Terminal subscribes to the mayday group URL. A GLMS in the PTT terminal's home network starts to add users to that group on the basis of pre-defined rules (filters). The rules may examine presence and location information such as those available users who are located within 500 metres of User-1 by subscribing to the Presence Servers in the home network.

In the case of a British skier (having a "home" network) travelling in the French Alps roaming on a "roaming" network, the initial additions to the group would be other home network subscribers in the area. In this case a notification would be returned by the GLMS to the PTT terminal as soon as one other member has been added to the group so that the call could be initially established.

Subsequently GLMS in the home network subscribes to the roaming network using a resource list accessed based on visited network information in the Subscribe request. Presence Servers in the roaming network conduct searches of their own presence information to find other users within the 500m range specified in the filters and return notify messages to the home network which would add those roaming network users into the Mayday group.

Subsequently, the roaming network Presence Server could then subscribe to a Presence Server of one or more other network operators in France using their own resource lists, with the rules they had received from the filters in the subscribe sent from the home (British) network. The Notify communications from the other networks are then notified back from the roaming network to the home network and those users so notified to GLMS also become members of the Mayday group.

The above-described embodiments of the present application are intended to be examples only. Those of skill in the art may effect alterations, modifications and variations to the particular embodiments without departing from the scope of the application. The invention described herein in the recited claims intends to cover and embrace all suitable changes in technology.

## Claims

1. A method of creating and managing a group of mobile stations (102, 202, 302) for a communication session in a communications network (104), the communication session being one in which users of respective mobile stations communicate with one another, the method comprising:
receiving at least one rule defining a member of the group; and
populating the group with members from said mobile stations determined in accordance with the at least one rule, said populating comprising determining which of users and/or the mobile stations of said users match the at least one rule;
the method being **characterized in that** the at least one rule is received in association with a group address and said group is dynamically populated with members of the group in accordance with respective information stored in and/or provided to the communications network (104) for the one or more particular mobile stations or users in order to initiate a group communications session.

2. The method of claim 1, wherein the at least one rule defines at least one characteristic of the users of respective mobile stations.

3. The method of claim 2, wherein the at least one rule defines at least one personal preference and/or at least one common interest of the users of respective mobile stations.

4. The method of claim 1, wherein the at least one rule defines a group of preselected mobile stations.

5. The method of any one of claims 1 to 4, wherein the at least one rule is communicated from a mobile station to a server (308, 310, 314).

6. The method of any one of claims 1 to 5, wherein the at least one rule is stored in Xtensible Markup Language "XML" format.

7. The method of any one of claims 1 to 6, wherein the information stored in or provided to the communications network (104) comprises respective presence and/or location information published for the one or more particular mobile stations or users of such stations.

8. The method of any one of claims 1 to 7, wherein the information for the one or more particular mobile stations or users is stored on one or more servers (310, 314).

9. The method of any one of claims 1 to 8, wherein the information for the one or more particular mobile stations or users is stored in Xtensible Markup Language "XML" format.

10. The method of any one of claims 1 to 9 comprising providing notification of members of the dynamic group in response to said populating.

11. The method of claim 7 or claim 10 when dependent on any one of claims 7 to 9, wherein determining which of said mobile station users match the at least one rule comprises requesting and receiving notification of the one or more particular mobile stations and/or users from a server (310) for defining a member of a dynamic group, said server (310) storing the presence and/or location information published by or on behalf of the mobile stations' users.

12. The method of claim 11, wherein determining comprises receiving notification that one or more particular mobile stations match the at least one rule in accordance with respective location information for the one or more particular mobile stations.

13. The method of claim 12 comprising subscribing to at least one server (308) which provides notification of mobile stations (102, 202, 302) that match one or more rules defined in response to presence information and/or location information for mobile stations; and wherein, said subscribing is responsive to said at least one rule.

14. The method of claim 13 comprising determining an address for each of the at least one server (308) for subscribing, said address being determined from a resource list of addresses for such servers.

15. The method of claim 13 or claim 14 comprising receiving notification of individual matching mobile stations as the individual matching mobile stations are determined by said at least one server (308) to hasten said populating.

16. The method of any one of claims 1 to 15 comprising maintaining said dynamic group, removing a particular one of said mobile stations or users as a member in accordance with the at least one rule.

17. The method of any one of claims 13 to 15 comprising receiving notification that a particular one of said mobile stations or users no longer matches the at least one rule.

18. The method of any one of claims 1 to 17 comprising receiving a change of the at least one rule and managing the members of the dynamic group in accordance with the change wherein managing comprises at least one of adding and removing members.

19. The method of any one of claims 1 to 18 comprising notifying a communications server (304) of the members of said dynamic group for facilitating communication among said members in the group communication session.

20. The method of any one of claims 1 to 19 comprising notifying a user using a mobile station of the members of said dynamic group.

21. The method of any one of claims 1 to 20 comprising extending a search for mobile stations matching the at least one rule.

22. The method of claim 21 when dependent on claim 13, wherein said subscribing to at least one server (308) extends the search to at least one of different domains and networks.

23. The method of any of claims 13 to 15, claim 17, claim 21 or claim 22 when dependent on claim 13 comprising further subscribing by one or more of said at least one server (308) to one or more other such servers to extend a search for mobile stations matching the pre-defined rule.

24. The method of claim 23, wherein said further subscribing extends the search for mobile stations to comprise a home network and a roaming network of a first mobile station.

25. The method of any of claims 1 to 24, wherein the group comprises a mayday group and the method comprises:
receiving a request from a first mobile station (102, 202, 302) to initiate a group communication with at least one second communication device proximate to said first mobile station; and
populating the mayday group with particular ones of said mobile stations determined in response to pre-defined rules for the mayday group.

26. A server (308) for creating and managing a group of mobile stations (102, 202, 302) for a communication session in a communications network (104), the communication session being one in which users of respective mobile stations communicate with one another, the server comprising:
a communication system for transmitting and receiving messages via the communications network (104);
a processor coupled to the communication system for processing messages; and
memory coupled to the processor for storing instructions to configure the processor to:
receive at least one rule defining a member of the group; and
populate the group with members from said mobile stations determined in accordance with the at least one rule, said populating comprising determining which of users and/or the mobile stations of said users match the at least one rule;
the server being **characterized in that** the processor is configured to receive the at least one rule in association with a group address and to dynamically populate said group with members of the group in accordance with respective information stored in and/or provided to the communications network (104) for the one or more particular mobile stations or users in order to initiate a group communications session.

27. The server of claim 26, wherein the memory further stores instructions to configure the processor to receive the at least one rule defining at least one characteristic of the users of respective mobile stations.

28. The server of claim 27, wherein the memory further stores instructions to configure the processor to receive the at least one rule defining at least one personal preference and/or at least one common interest of the users of respective mobile stations.

29. The server of claim 26, wherein the memory further stores instructions to configure the processor to receive the at least one rule defining a group of preselected mobile stations.

30. The server of any one of claims 26 to 29, wherein the memory further stores instructions to configure the processor to receive the at least one rule from a mobile station.

31. The server of any one of claims 26 to 30, wherein the memory further stores instructions to configure the processor to receive the at least one rule in Xtensible Markup Language "XML" format.

32. The server of any one of claims 26 to 31, wherein the memory further stores instructions to configure the processor to dynamically populate said group with members of the group in accordance with respective information stored in or provided to the communications network (104) comprising respective presence and/or location information published for the one or more particular mobile stations or users of such stations.

33. The server of any one of claims 26 to 32, wherein the memory further stores instructions to configure the processor to subscribe to at least one server which provides notification of mobile stations that match one or more rules defined in response to presence information and/or location information for mobile stations; and wherein, said subscribing is responsive to said at least one rule.

34. The server of any one of claims 26 to 33, wherein the memory further stores instructions to configure the processor to provide the members of the dynamic group to a server (304) for facilitating group communications among the members.

35. The server of any one of claims 26 to 34, wherein the memory further stores instructions to configure the processor to receive and store presence information published on behalf of the mobile stations and/or users of said stations.

36. A method of operating a server (308) for creating and managing a group of mobile stations (102, 202, 302) for a communication session in a communications network (104), the communication session being one in which users of respective mobile stations communicate with one another, the method comprising:
populating the group with members from said mobile stations determined in accordance with the at least one rule, said populating comprising determining which of users and/or the mobile stations of said users match the at least one rule;
the method being **characterized in** receiving the at least one rule in association with a group address and dynamically populating said group with members of the group in accordance with respective information stored in and/or provided to the communications network (104) for the one or more particular mobile stations or users in order to initiate a group communications session.

37. A mobile station (102, 202, 302) for initiating a communication session among other mobile stations in a communication network (104), the communication session being one in which users of respective mobile stations communicate with one another, the mobile station comprising:
a communication system (211) for transmitting and receiving messages via the communication network (104);
a processor (238) coupled to the communication system for processing messages; and
memory (224, 226) coupled to the processor for storing instructions to configure the processor to:
transmit at least one rule defining a member of the group to a server (308) adapted to create and manage the group, said server populating the group with members from said mobile stations determined in accordance with the at least one rule, said populating comprising determining which of users and/or the mobile stations of said users match the at least one rule;
the mobile station being **characterized in that** the processor is configured to transmit the at least one rule in association with a group address to enable the server to dynamically populate said group with members of the group in accordance with respective information stored in and/or provided to the communications network (104) for the one or more particular mobile stations or users in order to enable said mobile station to initiate said group communications session.

38. The mobile station (102, 202, 302) of claim 37, wherein the memory further stores instructions to configure the processor to transmit the at least one rule defining at least one characteristic of the users of respective mobile stations.

39. The mobile station (102, 202, 302) of claim 38, wherein the memory further stores instructions to configure the processor to transmit the at least one rule defining at least one personal preference and/or at least one common interest of the users of respective mobile stations.

40. The mobile station (102, 202, 302) of claim 37, wherein the memory further stores instructions to configure the processor to transmit the at least one rule defining a group of preselected mobile stations.

41. The mobile station (102, 202, 302) of any one of claims 37 to 40, wherein the memory further stores instructions to configure the processor to transmit the at least one rule in Xtensible Markup Language "XML" format.

42. The mobile station (102, 202, 302) of any one of claims 37 to 41, wherein the memory further stores instructions to configure the processor to transmit the at least one rule to enable the server to dynamically populate said group with members of the group in accordance with respective information stored in or provided to the communications network (104) comprising respective presence and/or location information published for the one or more particular mobile stations or users of such stations.

43. A method of operating a mobile station (102, 202, 302) for initiating a communication session among other mobile stations in a communication network (104), the communication session being one in which users of respective mobile stations communicate with one another, the method comprising:
transmitting at least one rule defining a member of the group to a server (308) adapted to create and manage the group, said server populating the group with members from said mobile stations determined in accordance with the at least one rule, said populating comprising determining which of users and/or the mobile stations of said users match the at least one rule;
the method being **characterized in that** the at least one rule is transmitted in association with a group address to enable the server to dynamically populate said group with members of the group in accordance with respective information stored in and/or provided to the communications network (104) for the one or more particular mobile stations or users in order to enable said mobile station to initiate said group communications session.

44. A telecommunications system comprising the server of any of claims 26 to 35 and the mobile station of any of claims 37 to 42.

45. A machine readable medium comprising program code means executable on the server of any of claims 26 to 35 for implementing the method of claim 36.

46. A machine readable medium comprising program code means executable on the mobile station of any of claims 37 to 42 for implementing the method of claim 43.

## Patentansprüche

1. Ein Verfahren zum Erstellen und Verwalten einer Gruppe von Mobilstationen (102, 202, 302) für eine Kommunikationssitzung in einem Kommunikationsnetz (104), wobei die Kommunikationssitzung **dadurch gekennzeichnet ist, dass** die Benutzer der jeweiligen Mobilstationen miteinander kommunizieren; hierbei beinhaltet das Verfahren:
das Empfangen einer oder mehrerer Regeln zur Definition eines Gruppenmitglieds; und
das Populieren der Gruppe mit Mitgliedern aus den Mobilstationen in Übereinstimmung mit der Regel/den Regeln, wobei beim Populieren ermittelt wird, welche Benutzer und/oder welche Mobilstationen der Benutzer der Regel/den Regeln entsprechen;
hierbei ist das Verfahren **dadurch gekennzeichnet, dass** die Regel(n) in Verbindung mit einer Gruppenadresse empfangen wird/werden und die Gruppe in Übereinstimmung mit entsprechenden, im Kommunikationsnetz (104) gespeicherten und/oder diesem zur Verfügung gestellten Informationen zu einer/einem oder mehreren spezifischen Mobilstationen oder Benutzern dynamisch mit Mitgliedern der Gruppe populiert wird, um eine Gruppenkommunikationssitzung zu initiieren.

2. Das Verfahren gemäß Anspruch 1, wobei die Regel(n) mindestens eine Eigenschaft der Benutzer der jeweiligen Mobilstationen definiert/definieren.

3. Das Verfahren gemäß Anspruch 2, wobei die Regel(n) mindestens eine persönliche Vorliebe und/oder mindestens ein gemeinsames Interesse der Benutzer der jeweiligen Mobilstationen definiert/definieren.

4. Das Verfahren gemäß Anspruch 1, wobei die Regel(n) eine Gruppe vorab ausgewählter Mobilstationen definiert/definieren.

5. Das Verfahren gemäß jedem der Ansprüche 1 bis 4, wobei die Regel(n) von einer Mobilstation an einen Server (308, 310, 314) übermittelt wird/werden.

6. Das Verfahren gemäß jedem der Ansprüche 1 bis 5, wobei die Regel(n) im XML-Format (Xtensible Markup Language) gespeichert wird/werden.

7. Das Verfahren gemäß jedem der Ansprüche 1 bis 6, wobei die im Kommunikationsnetz (104) gespeicherten oder diesem zur Verfügung gestellten Informationen jeweils Anwesenheits- und/oder Standortinformationen beinhalten, die für eine(n) oder mehrere spezifische Mobilstationen oder Benutzer solcher Stationen veröffentlicht werden.

8. Das Verfahren gemäß jedem der Ansprüche 1 bis 7, wobei die Informationen zu einer/einem oder mehreren spezifischen Mobilstationen oder Benutzern auf einem oder mehreren Servern (310, 314) gespeichert werden.

9. Das Verfahren gemäß jedem der Ansprüche 1 bis 8, wobei die Informationen zu einer/einem oder mehreren spezifischen Mobilstationen oder Benutzern im XML-Format (Xtensible Markup Language) gespeichert werden.

10. Das Verfahren gemäß jedem der Ansprüche 1 bis 9 unter Einbeziehung einer Bereitstellung von Benachrichtigungen der Mitglieder der dynamischen Gruppe als Reaktion auf das besagte Populieren.

11. Das Verfahren gemäß Anspruch 7 oder Anspruch 10 in Abhängigkeit von jedem der Ansprüche 7 bis 9, wobei das Ermitteln der Benutzer von Mobilstationen, die der Regel/den Regeln entsprechen, das Anfordern und Empfangen von Benachrichtigungen von einer/einem oder mehreren spezifischen Mobilstationen oder Benutzern durch einem Server (310) beinhaltet, um ein Mitglied einer dynamischen Gruppe zu definieren, und der Server (310) von den Benutzern der Mobilstationen oder in deren Auftrag veröffentlichten Anwesenheits- und/oder Standortinformationen speichert.

12. Das Verfahren gemäß Anspruch 11, wobei das Ermitteln den Empfang von Benachrichtigungen beinhaltet, dass eine oder mehrere spezifische Mobilstationen der Regel/den Regeln in Übereinstimmung mit den jeweiligen Standortinformationen für die spezifische(n) Mobilstation(en) entsprechen.

13. Das Verfahren gemäß Anspruch 12 unter Einbeziehung eines Subskribierens zu mindestens einem Server (308), der Benachrichtigungen von Mobilstationen (102, 202, 302) bereitstellt, die einer oder mehreren Regeln entsprechen, die als Reaktion auf Anwesenheitsinformationen und/oder Standortinformationen für Mobilstationen definiert werden; und wobei dieses Subskribieren als Reaktion auf diese Regel(n) erfolgt.

14. Das Verfahren gemäß Anspruch 13 unter Einbeziehung des Ermittelns einer Adresse für den/die Server (308) für das Subskribieren, wobei diese Adresse anhand einer Ressourcenliste mit Adressen für solche Server ermittelt wird.

15. Das Verfahren gemäß Anspruch 13 oder Anspruch 14 unter Einbeziehung des Empfangens von Benachrichtigungen von einzelnen Mobilstationen, die der oder den Regeln entsprechen, im Zuge von deren Ermittlung durch den/die Server (308) zur Beschleunigung des Populierens.

16. Das Verfahren gemäß jedem der Ansprüche 1 bis 15 unter Einbeziehung des Pflegens der dynamischen Gruppe, wobei eine spezifische Mobilstation oder ein spezifischer Benutzer als Mitglied in Übereinstimmung mit der Regel/den Regeln entfernt wird.

17. Das Verfahren gemäß jedem der Ansprüche 13 bis 15 unter Einbeziehung des Empfangens von Benachrichtigungen, dass eine spezifische Mobilstation oder ein spezifischer Benutzer der Regel/den Regeln nicht mehr entspricht.

18. Das Verfahren gemäß jedem der Ansprüche 1 bis 17 unter Einbeziehung des Empfangens einer Änderung der Regel(n) und des Verwaltens der Mitglieder der dynamischen Gruppe in Übereinstimmung mit der Änderung, wobei das Verwalten das Hinzufügen und/oder Entfernen von Mitgliedern beinhaltet.

19. Das Verfahren gemäß jedem der Ansprüche 1 bis 18 unter Einbeziehung der Benachrichtigung eines Kommunikationsservers (304) von den Mitgliedern der dynamischen Gruppe, um die Kommunikation zwischen den Mitgliedern in der Gruppenkommunikationssitzung zu erleichtern.

20. Das Verfahren gemäß jedem der Ansprüche 1 bis 19 unter Einbeziehung der Benachrichtigung eines Benutzers einer Mobilstation von den Mitgliedern der dynamischen Gruppe.

21. Das Verfahren gemäß jedem der Ansprüche 1 bis 20 unter Einbeziehung der Erweiterung einer Suche nach Mobilstationen, die der Regel/den Regeln entsprechen.

22. Das Verfahren gemäß Anspruch 21 in Abhängigkeit von Anspruch 13, wobei das Subskribieren zu mindestens einem Server (308) die Suche auf mindestens eine(s) von mehreren verschiedenen Domänen und Netzen erweitert.

23. Das Verfahren gemäß jedem der Ansprüche 13 bis 15, gemäß Anspruch 17, Anspruch 21 oder Anspruch 22 in Abhängigkeit von Anspruch 13 unter zusätzlicher Einbeziehung des Subskribierens durch einen oder mehrere Server (308) zu einem oder mehreren anderen Servern zur Erweiterung einer Suche nach Mobilstationen, die der vordefinierten Regel entsprechen.

24. Das Verfahren gemäß Anspruch 23, wobei das zusätzliche Subskribieren die Suche nach Mobilstationen dahingehend erweitert, dass diese ein Heimatnetz und ein Roaming-Netz einer ersten Mobilstation beinhaltet.

25. Das Verfahren gemäß jedem der Ansprüche 1 bis 24, wobei die Gruppe eine Notrufgruppe darstellt und das Verfahren beinhaltet:
das Empfangen einer Anforderung von einer ersten Mobilstation (102, 202, 302) zur Initiierung einer Gruppenkommunikation mit mindestens einem zweiten Kommunikationsgerät in unmittelbarer Nähe der ersten Mobilstation; und
das Populieren der Notfallgruppe mit spezifischen Mobilstationen, die als Reaktion auf vordefinierte Regeln für die Notfallgruppe ermittelt werden.

26. Ein Server (308) zum Erstellen und Verwalten einer Gruppe von Mobilstationen (102, 202, 302) für eine Kommunikationssitzung in einem Kommunikationsnetz (104), wobei die Kommunikationssitzung **dadurch gekennzeichnet ist, dass** die Benutzer der jeweiligen Mobilstationen miteinander kommunizieren; hierbei beinhaltet der Server:
ein Kommunikationssystem zum Senden und Empfangen von Nachrichten über das Kommunikationsnetz (104);
einen mit dem Kommunikationssystem verbundenen Prozessor zum Verarbeiten der Nachrichten; und
mit dem Prozessor verbundenen Speicher zum Speichern von Anweisungen, um den Prozessor zu konfigurieren für:
das Empfangen einer oder mehrerer Regeln zur Definition eines Gruppenmitglieds; und
das Populieren der Gruppe mit Mitgliedern aus den Mobilstationen in Übereinstimmung mit der Regel/den Regeln, wobei beim Populieren ermittelt wird, welche Benutzer und/oder welche Mobilstationen der Benutzer der Regel/den Regeln entsprechen;
hierbei ist der Server **dadurch gekennzeichnet, dass** der Prozessor so konfiguriert ist, dass die Regel(n) in Verbindung mit einer Gruppenadresse empfangen wird/werden und die Gruppe in Übereinstimmung mit entsprechenden, im Kommunikationsnetz (104) gespeicherten und/oder diesem zur Verfügung gestellten Informationen zu einer/einem oder mehreren spezifischen Mobilstationen oder Benutzern dynamisch mit Mitgliedern der Gruppe populiert wird, um eine Gruppenkommunikationssitzung zu initiieren.

27. Der Server gemäß Anspruch 26, wobei im Speicher darüber hinaus Anweisungen gespeichert werden, um den Prozessor für das Empfangen der Regel(n) zu konfigurieren, die mindestens eine Eigenschaft der Benutzer der jeweiligen Mobilstationen definiert/definieren.

28. Der Server gemäß Anspruch 27, wobei im Speicher darüber hinaus Anweisungen gespeichert werden, um den Prozessor für das Empfangen der Regel(n) zu konfigurieren, die mindestens eine persönliche Vorliebe und/oder mindestens ein gemeinsames Interesse der Benutzer der jeweiligen Mobilstationen definiert/definieren.

29. Der Server gemäß Anspruch 26, wobei im Speicher darüber hinaus Anweisungen gespeichert werden, um den Prozessor für das Empfangen der Regel(n) zu konfigurieren, die eine Gruppe vorab ausgewählter Mobilstationen definiert/definieren.

30. Der Server gemäß jedem der Ansprüche 26 bis 29, wobei im Speicher darüber hinaus Anweisungen gespeichert werden, um den Prozessor für das Empfangen der Regel(n) von einer Mobilstation zu konfigurieren.

31. Der Server gemäß jedem der Ansprüche 26 bis 30, wobei im Speicher darüber hinaus Anweisungen gespeichert werden, um den Prozessor für das Empfangen der Regel(n) im XML-Format (Xtensible Markup Language) zu konfigurieren.

32. Der Server gemäß jedem der Ansprüche 26 bis 31, wobei im Speicher darüber hinaus Anweisungen gespeichert werden, um den Prozessor für das Populieren der Gruppe mit Mitgliedern der Gruppe in Übereinstimmung mit entsprechenden, im Kommunikationsnetz (104) gespeicherten oder diesem zur Verfügung gestellten Informationen zu konfigurieren, die jeweils Anwesenheits- und/oder Standortinformationen beinhalten, die für eine(n) oder mehrere spezifische Mobilstationen oder Benutzer solcher Stationen veröffentlicht werden.

33. Der Server gemäß jedem der Ansprüche 26 bis 32, wobei im Speicher darüber hinaus Anweisungen gespeichert werden, um den Prozessor für das Subskribieren zu mindestens einem Server zu konfigurieren, der Benachrichtigungen von Mobilstationen bereitstellt, die einer oder mehreren Regeln entsprechen, die als Reaktion auf Anwesenheitsinformationen und/oder Standortinformationen für Mobilstationen definiert werden; und wobei das Subskribieren als Reaktion auf diese Regel(n) erfolgt.

34. Der Server gemäß jedem der Ansprüche 26 bis 33, wobei im Speicher darüber hinaus Anweisungen gespeichert werden, um den Prozessor für das Bereitstellen der Mitglieder der dynamischen Gruppen für einen Server (304) zu konfigurieren, um die Gruppenkommunikation zwischen den Mitgliedern zu erleichtern.

35. Der Server gemäß jedem der Ansprüche 26 bis 34, wobei im Speicher darüber hinaus Anweisungen gespeichert werden, um den Prozessor für das Empfangen und Speichern von Anwesenheitsinformationen zu konfigurieren, die im Auftrag der Mobilstationen und/oder Benutzer dieser Stationen veröffentlicht werden.

36. Ein Verfahren zum Betrieb eines Servers (308) zum Erstellen und Verwalten einer Gruppe von Mobilstationen (102, 202, 302) für eine Kommunikationssitzung in einem Kommunikationsnetz (104), wobei die Kommunikationssitzung **dadurch gekennzeichnet ist, dass** die Benutzer der jeweiligen Mobilstationen miteinander kommunizieren; hierbei beinhaltet das Verfahren:
das Populieren der Gruppe mit Mitgliedern aus den Mobilstationen in Übereinstimmung mit der Regel/den Regeln, wobei beim Populieren ermittelt wird, welche Benutzer und/oder welche Mobilstationen der Benutzer der Regel/den Regeln entsprechen;
hierbei ist das Verfahren **dadurch gekennzeichnet, dass** die Regel(n) in Verbindung mit einer Gruppenadresse empfangen wird/werden und die Gruppe in Übereinstimmung mit entsprechenden, im Kommunikationsnetz (104) gespeicherten und/oder diesem zur Verfügung gestellten Informationen zu einer/einem oder mehreren spezifischen Mobilstationen oder Benutzern dynamisch mit Mitgliedern der Gruppe populiert wird, um eine Gruppenkommunikationssitzung zu initiieren.

37. Eine Mobilstation (102, 202, 302) zum Initiieren einer Kommunikationssitzung zwischen anderen Mobilstationen in einem Kommunikationsnetz (104), wobei die Kommunikationssitzung **dadurch gekennzeichnet ist, dass** die Benutzer der jeweiligen Mobilstationen miteinander kommunizieren; hierbei beinhaltet die Mobilstation:
ein Kommunikationssystem (211) zum Senden und Empfangen von Nachrichten über das Kommunikationsnetz (104);
einen mit dem Kommunikationssystem verbundenen Prozessor (238) zum Verarbeiten der Nachrichten; und
mit dem Prozessor verbundenen Speicher (224, 226) zum Speichern von Anweisungen, um den Prozessor zu konfigurieren für:
das Senden einer oder mehrerer Regeln zur Definition eines Mitglieds der Gruppe an einen Server (308), der für das Erstellen und Verwalten der Gruppe eingerichtet ist, wobei dieser Server die Gruppe mit Mitgliedern aus den Mobilstationen in Übereinstimmung mit der Regel/den Regeln populiert und hierbei ermittelt wird, welche Benutzer und/oder welche Mobilstationen der Benutzer der Regel/den Regeln entsprechen;
hierbei ist die Mobilstation **dadurch gekennzeichnet, dass** der Prozessor so konfiguriert ist, dass die Regel(n) in Verbindung mit einer Gruppenadresse gesendet wird/werden, sodass der Server in der Lage ist, die Gruppe in Übereinstimmung mit entsprechenden, im Kommunikationsnetz (104) gespeicherten und/oder diesem zur Verfügung gestellten Informationen zu einer/einem oder mehreren spezifischen Mobilstationen oder Benutzern dynamisch mit Mitgliedern der Gruppe zu populieren, sodass die Mobilstation in der Lage ist, eine Gruppenkommunikationssitzung zu initiieren.

38. Die Mobilstation (102, 202, 302) gemäß Anspruch 37, wobei im Speicher darüber hinaus Anweisungen gespeichert werden, um den Prozessor für das Senden der Regel(n) zu konfigurieren, die mindestens eine Eigenschaft der Benutzer der jeweiligen Mobilstationen definiert/definieren.

39. Die Mobilstation (102, 202, 302) gemäß Anspruch 38, wobei im Speicher darüber hinaus Anweisungen gespeichert werden, um den Prozessor für das Senden der Regel(n) zu konfigurieren, die mindestens eine persönliche Vorliebe und/oder mindestens ein gemeinsames Interesse der Benutzer der jeweiligen Mobilstationen definiert/definieren.

40. Die Mobilstation (102, 202, 302) gemäß Anspruch 37, wobei im Speicher darüber hinaus Anweisungen gespeichert werden, um den Prozessor für das Senden der Regel(n) zu konfigurieren, die eine Gruppe vorab ausgewählter Mobilstationen definiert/definieren.

41. Die Mobilstation (102, 202, 302) gemäß jedem der Ansprüche 37 bis 40, wobei im Speicher darüber hinaus Anweisungen gespeichert werden, um den Prozessor für das Senden der Regel(n) im XML-Format (Xtensible Markup Language) zu konfigurieren.

42. Die Mobilstation (102, 202, 302) gemäß jedem der Ansprüche 37 bis 41, wobei im Speicher darüber hinaus Anweisungen gespeichert werden, um den Prozessor für das Senden der Regel(n) zu konfigurieren, sodass der Server in der Lage ist, die Gruppe dynamisch mit Mitgliedern der Gruppe in Übereinstimmung mit entsprechenden, im Kommunikationsnetz (104) gespeicherten oder diesem zur Verfügung gestellten Informationen zu populieren, die jeweils Anwesenheits- und/oder Standortinformationen beinhalten, die für eine(n) oder mehrere spezifische Mobilstationen oder Benutzer solcher Stationen veröffentlicht werden.

43. Ein Verfahren zum Betrieb einer Mobilstation (102, 202, 302) zum Initiieren einer Kommunikationssitzung zwischen anderen Mobilstationen in einem Kommunikationsnetz (104), wobei die Kommunikationssitzung **dadurch gekennzeichnet ist, dass** die Benutzer der jeweiligen Mobilstationen miteinander kommunizieren; hierbei beinhaltet das Verfahren:
das Senden einer oder mehrerer Regeln zur Definition eines Mitglieds der Gruppe an einen Server (308), der für das Erstellen und Verwalten der Gruppe eingerichtet ist, wobei dieser Server die Gruppe mit Mitgliedern aus den Mobilstationen in Übereinstimmung mit der Regel/den Regeln populiert und hierbei ermittelt wird, welche Benutzer und/oder welche Mobilstationen der Benutzer der Regel/den Regeln entsprechen;
hierbei ist das Verfahren **dadurch gekennzeichnet, dass** die Regel(n) in Verbindung mit einer Gruppenadresse gesendet wird/werden, sodass der Server in der Lage ist, die Gruppe in Übereinstimmung mit entsprechenden, im Kommunikationsnetz (104) gespeicherten und/oder diesem zur Verfügung gestellten Informationen zu einer/einem oder mehreren spezifischen Mobilstationen oder Benutzern dynamisch mit Mitgliedern der Gruppe zu populieren, sodass die Mobilstation in der Lage ist, eine Gruppenkommunikationssitzung zu initiieren.

44. Ein Telekommunikationssystem, bestehend aus dem Server gemäß jedem der Ansprüche 26 bis 35 und der Mobilstation gemäß jedem der Ansprüche 37 bis 42.

45. Ein maschinenlesbares Medium, das Programmcode zur Ausführung auf dem Server gemäß jedem der Ansprüche 26 bis 35 als Mittel zur Umsetzung des Verfahrens gemäß Anspruch 36 beinhaltet.

46. Ein maschinenlesbares Medium, das Programmcode zur Ausführung auf der Mobilstation gemäß jedem der Ansprüche 37 bis 42 als Mittel zur Umsetzung des Verfahrens gemäß Anspruch 43 beinhaltet.

## Revendications

1. Une méthode de création et de gestion d'un groupe de stations mobiles (102, 202, 302) pour une session de communication sur un réseau de télécommunications (104), la session de communication étant une session au cours de laquelle les utilisateurs des stations mobiles respectives communiquent l'un avec l'autre, la méthode comportant :
la réception d'au moins une règle définissant un membre du groupe ; et
le peuplement du groupe de membres desdites stations mobiles déterminés conformément à l'au moins une règle, ledit peuplement comportant la détermination des utilisateurs et/ou des stations mobiles desdits utilisateurs qui sont conformes à l'au moins une règle ;
la méthode étant **caractérisée en ce que** l'au moins une règle est reçue conjointement avec une adresse de groupe et ledit groupe est dynamiquement peuplé de membres du groupe conformément aux informations respectives stockées et/ou fournies sur le réseau de télécommunications (104) pour la ou les stations mobiles ou le ou les utilisateurs donné(e)s dans le but de lancer une session de communication de groupe.

2. La méthode de la revendication 1, dans laquelle l'au moins une règle définit au moins une caractéristique des utilisateurs des stations mobiles respectives.

3. La méthode de la revendication 2, dans laquelle l'au moins une règle définit au moins une préférence personnelle et/ou au moins un intérêt commun des utilisateurs des stations mobiles respectives.

4. La méthode de la revendication 1, dans laquelle l'au moins une règle définit un groupe de stations mobiles présélectionnées.

5. La méthode de l'une quelconque des revendications 1 à 4, dans laquelle l'au moins une règle est communiquée depuis une station mobile vers un serveur (308, 310,314).

6. La méthode de l'une quelconque des revendications 1 à 5, dans laquelle l'au moins une règle est stockée au format XML.

7. La méthode de l'une quelconque des revendications 1 à 6, dans laquelle les informations stockées ou fournies sur le réseau de télécommunications (104) comportent des informations respectives de présence et/ou de localisation publiées pour la ou les stations mobiles ou le ou les utilisateurs donné(e)s de ces stations.

8. La méthode de l'une quelconque des revendications 1 à 7, dans laquelle les informations pour la ou les stations mobiles ou le ou les utilisateurs donné(e)s sont stockées sur un ou plusieurs serveurs (310, 314).

9. La méthode de l'une quelconque des revendications 1 à 8, dans laquelle les informations pour la ou les stations mobiles ou le ou les utilisateurs donné(e)s sont stockées au format XML.

10. La méthode de l'une quelconque des revendications 1 à 9 comportant la fourniture de notification des membres du groupe dynamique en réponse audit peuplement.

11. La méthode de la revendication 7 ou de la revendication 10 lorsqu'elle dépend de l'une quelconque des revendications 7 à 9, dans laquelle la détermination desdits utilisateurs des stations mobiles qui sont conformes à l'au moins une règle comporte la demande et la réception de notification de la ou des stations mobiles et/ou du ou des utilisateurs donné(e)s depuis un serveur (310) pour la définition d'un membre d'un groupe dynamique, ledit serveur (310) stockant les informations de présence et/ou de localisation publiées par ou au nom des utilisateurs des stations mobiles.

12. La méthode de la revendication 11, dans laquelle la détermination comporte la réception de notification qu'une ou des stations mobiles données sont conformes à l'au moins une règle conformément aux informations respectives de localisation publiées pour la ou les stations mobiles données.

13. La méthode de la revendication 12 comportant l'abonnement à au moins un serveur (308) fournissant la notification de stations mobiles (102, 202, 302) conformes à une ou plusieurs règles définies en réponse aux informations de présence et/ou aux informations de localisation pour les stations mobiles ; et dans laquelle ledit abonnement tient compte de ladite au moins une règle.

14. La méthode de la revendication 13 comportant la détermination d'une adresse pour chacun de l'au moins un serveur (308) pour l'abonnement, ladite adresse étant déterminée à partir d'une liste d'adresses de ressources pour de tels serveurs.

15. La méthode de la revendication 13 ou de la revendication 14 comportant la réception de notification de stations mobiles individuelles conformes, à mesure que les stations mobiles individuelles conformes sont déterminées par ledit au moins un serveur (308) pour accélérer ledit peuplement.

16. La méthode de l'une quelconque des revendications 1 à 15 comportant le maintien dudit groupe dynamique, la suppression d'une station mobile donnée desdites stations mobiles ou d'un utilisateur donné desdits utilisateurs comme membre conformément à l'au moins une règle.

17. La méthode de l'une quelconque des revendications 13 à 15 comportant la réception de notification qu'une station mobile donnée desdites stations mobiles ou un utilisateur donné desdits utilisateurs n'est plus conforme à l'au moins une règle.

18. La méthode de l'une quelconque des revendications 1 à 17 comportant la réception d'une modification de l'au moins une règle et la gestion des membres du groupe dynamique conformément à la modification, où la gestion comporte au moins un ajout et une suppression de membres.

19. La méthode de l'une quelconque des revendications 1 à 18 comportant la notification d'un serveur d'accès à distance (304) des membres dudit groupe dynamique dans le but de faciliter la communication entre lesdits membres de la session de communication de groupe.

20. La méthode de l'une quelconque des revendications 1 à 19 comportant la notification d'un utilisateur utilisant une station mobile des membres dudit groupe dynamique.

21. La méthode de l'une quelconque des revendications 1 à 20 comportant l'élargissement d'une recherche de stations mobiles conformes à l'au moins une règle.

22. La méthode de la revendication 21 lorsqu'elle dépend de la revendication 13, dans laquelle ledit abonnement à au moins un serveur (308) élargit la recherche à au moins un des différents domaines et réseaux.

23. La méthode de l'une quelconque des revendications 13 à 15, de la revendication 17, de la revendication 21 ou de la revendication 22 lorsqu'elle dépend de la revendication 13 comportant un abonnement supplémentaire d'un ou de plusieurs desdits serveurs (308) à un ou plusieurs autres serveurs du même type pour élargir une recherche de stations mobiles conformes à la règle prédéfinie.

24. La méthode de la revendication 23, dans laquelle ledit abonnement supplémentaire élargit la recherche de stations mobiles pour comprendre un réseau domestique et un réseau itinérant d'une première station mobile.

25. La méthode de l'une quelconque des revendications 1 à 24, dans laquelle le groupe comporte un groupe mayday et la méthode comporte :
la réception d'une requête d'une première station mobile (102, 202, 302) de lancement d'une communication de groupe avec au moins un deuxième dispositif de communication à proximité de ladite première station mobile ; et
le peuplement du groupe mayday de stations mobiles données desdites stations mobiles déterminées en réponse à des règles prédéfinies pour le groupe mayday

26. Un serveur (308) pour la création et la gestion d'un groupe de stations mobiles (102, 202, 302) pour une session de communication sur un réseau de télécommunications (104), la session de communication étant une session au cours de laquelle les utilisateurs des stations mobiles respectives communiquent l'un avec l'autre, le serveur comportant :
un système de communication pour la transmission et la réception de messages via le réseau de télécommunications (104) ;
un processeur combiné au système de communication pour le traitement des messages ; et
une mémoire combinée au processeur pour le stockage des instructions de configuration du processeur permettant de :
recevoir au moins une règle définissant un membre du groupe ; et
peupler le groupe de membres desdites stations mobiles déterminés conformément à l'au moins une règle, ledit peuplement comportant la détermination des utilisateurs et/ou des stations mobiles desdits utilisateurs qui sont conformes à l'au moins une règle ;
le serveur étant **caractérisé en ce que** le processeur est configuré pour recevoir l'au moins une règle conjointement avec une adresse de groupe et pour dynamiquement peupler ledit groupe de membres du groupe conformément aux informations respectives stockées et/ou fournies sur le réseau de télécommunications (104) pour la ou les stations mobiles ou le ou les utilisateurs donné(e)s dans le but de lancer une session de communication de groupe ;

27. Le serveur de la revendication 26, dans lequel la mémoire stocke en outre des instructions de configuration du processeur permettant de recevoir l'au moins une règle définissant au moins une caractéristique des utilisateurs des stations mobiles respectives.

28. Le serveur de la revendication 27, dans lequel la mémoire stocke en outre des instructions de configuration du processeur permettant de recevoir l'au moins une règle définissant au moins une préférence personnelle et/ou au moins un intérêt commun des utilisateurs des stations mobiles respectives.

29. Le serveur de la revendication 26, dans lequel la mémoire stocke en outre des instructions de configuration du processeur permettant de recevoir l'au moins une règle définissant un groupe de stations mobiles présélectionnées.

30. Le serveur de l'une quelconque des revendications 26 à 29, dans lequel la mémoire stocke en outre des instructions de configuration du processeur permettant de recevoir l'au moins une règle depuis une station mobile.

31. Le serveur de l'une quelconque des revendications 26 à 30, dans lequel la mémoire stocke en outre des instructions de configuration du processeur permettant de recevoir l'au moins une règle au format XML.

32. Le serveur de l'une quelconque des revendications 26 à 31, dans lequel la mémoire stocke en outre des instructions de configuration du processeur permettant de dynamiquement peupler ledit groupe de membres du groupe conformément aux informations respectives stockées ou fournies sur le réseau de télécommunications (104) comportant des informations respectives de présence et/ou de localisation publiées pour la ou les stations mobiles ou le ou les utilisateurs donné(e)s de ces stations.

33. Le serveur de l'une quelconque des revendications 26 à 32, dans lequel la mémoire stocke en outre des instructions de configuration du processeur permettant l'abonnement à au moins un serveur fournissant la notification des stations mobiles conformes à une ou plusieurs règles définies en réponse aux informations de présence et/ou aux informations de localisation pour les stations mobiles ; et dans lequel ledit abonnement tient compte de ladite au moins une règle.

34. Le serveur de l'une quelconque des revendications 26 à 33, dans lequel la mémoire stocke en outre des instructions de configuration du processeur permettant de fournir aux membres dudit groupe dynamique un serveur (304) pour faciliter les communications de groupe entre les membres.

35. Le serveur de l'une quelconque des revendications 26 à 34, dans lequel la mémoire stocke en outre des instructions de configuration du processeur permettant de recevoir et de stocker des informations de présence publiées au nom des stations mobiles et/ou des utilisateurs desdites stations.

36. Une méthode d'exploitation d'un serveur (308) pour la création et la gestion d'un groupe de stations mobiles (102, 202, 302) pour une session de communication sur un réseau de télécommunications (104), la session de communication étant une session au cours de laquelle les utilisateurs des stations mobiles respectives communiquent l'un avec l'autre, la méthode comportant :
le peuplement du groupe de membres desdites stations mobiles déterminés conformément à l'au moins une règle, ledit peuplement comportant la détermination des utilisateurs et/ou des stations mobiles desdits utilisateurs qui sont conformes à l'au moins une règle ;
la méthode étant **caractérisée par** la réception de l'au moins une règle conjointement avec une adresse de groupe et par le peuplement dynamique dudit groupe de membres du groupe conformément aux informations respectives stockées et/ou fournies sur le réseau de télécommunications (104) pour la ou les stations mobiles ou le ou les utilisateurs donné(e)s dans le but de lancer une session de communication de groupe ;

37. Une station mobile (102, 202, 302) pour le lancement d'une session de communication entre d'autres stations mobiles sur un réseau de télécommunications (104), la session de communication étant une session au cours de laquelle les utilisateurs des stations mobiles respectives communiquent l'un avec l'autre, la station mobile comportant :
un système de communication (211) pour la transmission et la réception de messages via le réseau de télécommunications (104) ;
un processeur (238) combiné au système de communication pour le traitement des messages ; et
une mémoire (224, 226) combinée au processeur pour le stockage des instructions de configuration du processeur permettant de :
transmettre au moins une règle définissant un membre du groupe vers un serveur (308) adapté à créer et gérer le groupe, ledit serveur peuplant le groupe de membres desdites stations mobiles déterminés conformément à l'au moins une règle, ledit peuplement comportant la détermination des utilisateurs et/ou des stations mobiles desdits utilisateurs qui sont conformes à l'au moins une règle ;
la station mobile étant **caractérisée en ce que** le processeur est configuré pour transmettre l'au moins une règle conjointement avec une adresse de groupe pour permettre au serveur de dynamiquement peupler ledit groupe de membres du groupe conformément aux informations respectives stockées et/ou fournies sur le réseau de télécommunications (104) pour la ou les stations mobiles ou le ou les utilisateurs donné(e)s dans le but de permettre à ladite station mobile de lancer une session de communication de groupe ;

38. La station mobile (102, 202, 302) de la revendication 37, dans laquelle la mémoire stocke en outre des instructions de configuration du processeur permettant de transmettre l'au moins une règle définissant au moins une caractéristique des utilisateurs des stations mobiles respectives.

39. La station mobile (102, 202, 302) de la revendication 38, dans laquelle la mémoire stocke en outre des instructions de configuration du processeur permettant de transmettre l'au moins une règle définissant au moins une préférence personnelle et/ou au moins un intérêt commun des utilisateurs des stations mobiles respectives.

40. La station mobile (102, 202, 302) de la revendication 37, dans laquelle la mémoire stocke en outre des instructions de configuration du processeur permettant de transmettre l'au moins une règle définissant un groupe de stations mobiles présélectionnées.

41. La station mobile (102, 202, 302) de l'une quelconque des revendications 37 à 40, dans laquelle la mémoire stocke en outre des instructions de configuration du processeur permettant de transmettre l'au moins une règle au format XML.

42. La station mobile (102, 202, 302) de l'une quelconque des revendications 37 à 41, dans laquelle la mémoire stocke en outre des instructions de configuration du processeur permettant de transmettre l'au moins une règle pour permettre au serveur de dynamiquement peupler ledit groupe de membres du groupe conformément aux informations respectives stockées ou fournies sur le réseau de télécommunications (104) comportant des informations respectives de présence et/ou de localisation publiées pour la ou les stations mobiles ou le ou les utilisateurs donné(e)s de ces stations.

43. Une méthode d'exploitation d'une station mobile (102, 202, 302) pour le lancement d'une session de communication entre d'autres stations mobiles sur un réseau de télécommunications (104), la session de communication étant une session au cours de laquelle les utilisateurs des stations mobiles respectives communiquent l'un avec l'autre, la méthode comportant :
la transmission d'au moins une règle définissant un membre du groupe vers un serveur (308) adapté à créer et gérer le groupe, ledit serveur peuplant le groupe de membres desdites stations mobiles déterminés conformément à l'au moins une règle, ledit peuplement comportant la détermination des utilisateurs et/ou des stations mobiles desdits utilisateurs qui sont conformes à l'au moins une règle ;
la méthode étant **caractérisée en ce que** l'au moins une règle est transmise conjointement avec une adresse de groupe pour permettre au serveur de dynamiquement peupler ledit groupe de membres du groupe conformément aux informations respectives stockées et/ou fournies sur le réseau de télécommunications (104) pour la ou les stations mobiles ou le ou les utilisateurs donné(e)s dans le but de permettre à ladite station mobile de lancer une session de communication de groupe.

44. Un système de télécommunications comportant le serveur de l'une quelconque des revendications 26 à 35 et la station mobile de l'une quelconque des revendications 37 à 42.

45. Un support exploitable par une machine comportant des moyens à code de programme exécutables sur le serveur de l'une quelconque des revendications 26 à 35 pour la mise en oeuvre de la méthode de la revendication 36.

46. Un support exploitable par une machine comportant des moyens à code de programme exécutables sur la station mobile de l'une quelconque des revendications 37 à 42 pour la mise en oeuvre de la méthode de la revendication 43.
